# DEMANDE DE BREVET EUROPEEN

(11) **EP 0 703 119 A1**
(43) Date de publication de la demande: **27.03.1996**
(21) Numéro de dépôt: 95402116.8
(22) Date de dépôt: 20.09.1995
(51) Int. Cl.: B60R 16/02

(54) **Contacteur électrique tournant comprenant un surmoulage perfectionné pour conducteur électrique souple**

(30) Priorité: 21.09.1994 FR 9411257
(71) Demandeur: MAGNETI MARELLI FRANCE, F-92000 Nanterre (FR)
(72) Inventeur: Hallet, Michel, F-14320 Clinchamps sur Orne (FR)
(74) Mandataire: Texier, Christian

(57) **Abrégé**

La présente invention concerne un contacteur électrique tournant du type connu comprenant deux éléments (100, 200) susceptibles de rotation relative et un conducteur électrique souple (300) entre ces deux éléments, dans lequel l'une des sorties au moins du conducteur souple (300) est formée d'au moins deux brins séparés (420, 430) munis chacun de surmoulages (460), et dans lequel ces surmoulages (460) présentent le long des brins (420, 430) des motifs (462, 466) de largeur non constante, lesdits surmoulages (460) étant décalés relativement d'un demi pas (x/2) des motifs, de sorte que les creux des motifs de l'un des surmoulages (460) soient placés en regard des ventres des motifs de l'autre surmoulage.

## Description

La présente invention concerne le domaine des contacteurs électriques tournants.

Plus précisément; la présente invention concerne les contacteurs du type comprenant :
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

Dans la majorité de ces contacteurs électriques tournants connus, le premier élément de boîtier fixe et le second élément de boîtier mobile à rotation par rapport au premier élément de boîtier fixe délimitent en combinaison une chambre annulaire dans laquelle le conducteur souple est enroulé en spirale. Ainsi, dans la chambre annulaire le conducteur souple s'étend dans une direction générale périphérique.

Par ailleurs, il s'avère généralement nécessaire de protéger le conducteur souple au niveau de ses sorties qui émergent à l'extérieur du contacteur.

Il a été pour cela proposé de procéder à un surmoulage d'un enrobage, au moins partiel, de protection, sur les sorties du conducteur souple.

Un tel surmoulage ne pose pas de problème particulier lorsque la sortie du conducteur souple qui émerge à l'extérieur du contacteur, est formée d'un brin ou d'une branche unique.

En revanche, ce surmoulage de protection est beaucoup plus délicat à réaliser lorsque la sortie du conducteur souple émergeant à l'extérieur du contacteur est formée d'au moins deux brins ou branches parallèles, du fait que bien que présentant seulement un très faible écartement en raison du faible encombrement imposé, notamment sur véhicule automobile, ces brins ou branches doivent rester séparés, c'est-à-dire individualisés, après le surmoulage.

Les différents brins ou branches parallèles peuvent être par exemple formés par découpe longitudinale des sorties d'un film électriquement isolant revêtu de plusieurs pistes électriquement conductrices.

Il s'avère en particulier nécessaire de former plusieurs brins ou branches sur une sortie du conducteur souple, lorsque l'on souhaite connecter directement ces différents brins en des lieux géométriquement séparés (évitant par exemple ainsi des liaisons additionnelles par fils ou équivalents entre les pistes respectives de sortie du conducteur souple et les différents lieux de connexion précités).

La présente invention a pour but principal de résoudre le problème ainsi posé.

Ce but est atteint selon la présente invention grâce à un contacteur électrique tournant du type connu comprenant deux éléments susceptibles de rotation relative et un conducteur électrique souple placé entre ces deux éléments, dans lequel l'une des sorties au moins du conducteur souple est formée d'au moins deux brins séparés, munis chacun d'un surmoulage, et dans lequel ces surmoulages présentent, le long des brins, des motifs de largeur non constante, lesdits surmoulages étant décalés relativement d'un demi-pas des motifs de sorte que les creux des motifs de l'un des surmoulages soient placés en regard des ventres des motifs de l'autre surmoulage.

Selon une autre caractéristique avantageuse de la présence invention, les motifs des surmoulages prévus sur les deux brins ont des pas identiques et de préférence constant.

Selon une autre caractéristique avantageuse de la présente invention, les motifs des surmoulages sont formés d'anneaux espacés qui entourent un brin respectif du conducteur souple et d'au moins une bretelle longitudinale qui relie deux à deux les anneaux.

En outre, alors que le conducteur souple s'étend dans une direction générale périphérique, dans la chambre annulaire du contacteur, le plus souvent les sorties du conducteur souple sont au contraire orientées axialement.

De ce fait, il est généralement nécessaire de couder les extrémités du conducteur souple, ce qui conduit à des zones de faiblesse sur les extrémités de celui-ci.

La présente invention a également pour but de proposer à cette fin, au moins sur une extrémité du conducteur électrique souple, un boîtier de protection adapté pour maintenir un pliage sur ce conducteur et protéger la zone de pliage ainsi obtenue.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en perspective éclatée d'un contacteur électrique conforme à la présente invention,
- la figure 2 représente une extrémité d'un conducteur souple comprenant un surmoulage de protection conforme à la présente invention, engagé sur un contacteur tournant,
- la figure 3 représente la même extrémité du conducteur souple avant réalisation du surmoulage de protection,
- la figure 4 représente une vue en perspective du surmoulage de protection seul, sans le conducteur souple,
- la figure 5 représente une vue schématique en perspective d'un boîtier de protection surmoulé sur une extrémité d'un conducteur électrique souple conforme à une première variante de réalisation de la préernte invention, avant pliage de ce boîtier de protection,
- la figure 6 représente une vue en perspective du même boîtier de protection, après pliage,
- la figure 7 représente une première vue en perspective d'un couvercle pivotant du contacteur conforme à la présente invention,
- la figure 8 représente une seconde vue en perspective, opposée à la figure 7, du même boîtier pivotant,
- la figure 9 représente une vue en coupe axiale du même boîtier pivotant,
- la figure 10 représente une seconde vue en coupe axiale du même boîtier pivotant, selon un plan de coupe orthogonale à celui de la figure 9,
- la figure 11 représente une vue similaire à la figure 7 et illustre l'engagement d'un conducteur électrique souple équipé d'un boîtier de protection sur le boîtier pivotant,
- la figure 12 représente une vue similaire à la figure 11 et représente le conducteur électrique souple équipé du boîtier de protection engagé sur le couvercle pivotant,
- la figure 13 représente une vue en coupe axiale similaire à la figure 9 du couvercle pivotant équipé du conducteur électrique souple muni d'un boîtier de protection conforme à la première variante de réalisation de la présente invention,
- la figure 14 représente une vue schématique en perspective du seul boîtier de protection conforme à une seconde variante de réalisation de la présente invention, avant pliage de ce boîtier de protection (le conducteur étant omis pour simplifier le dessin),
- la figure 15 représente une vue en perspective du même boîtier de protection, après pliage,

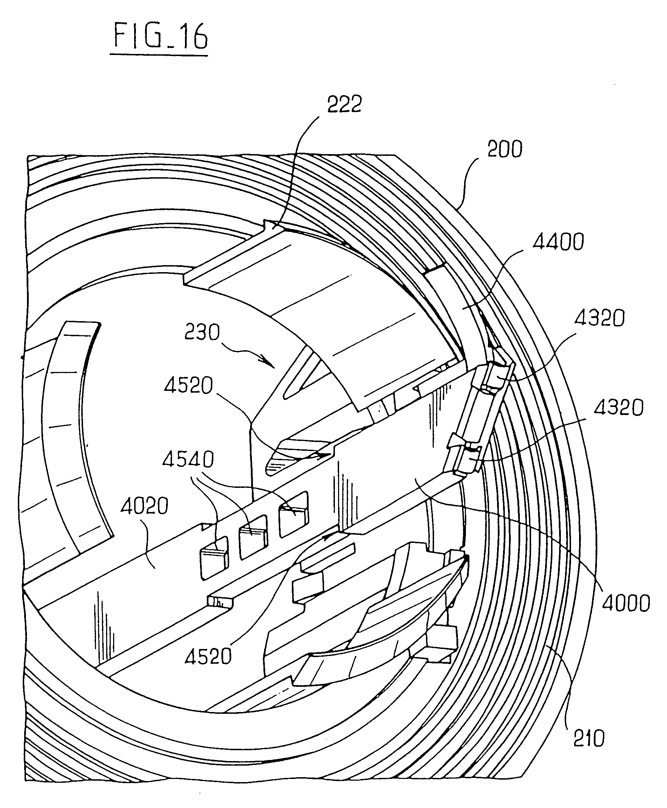

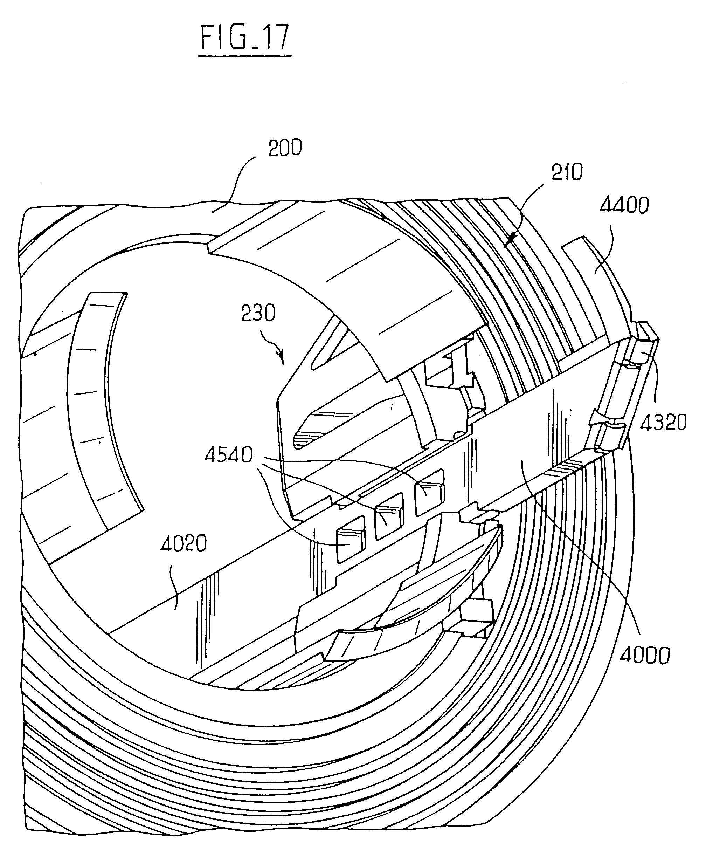

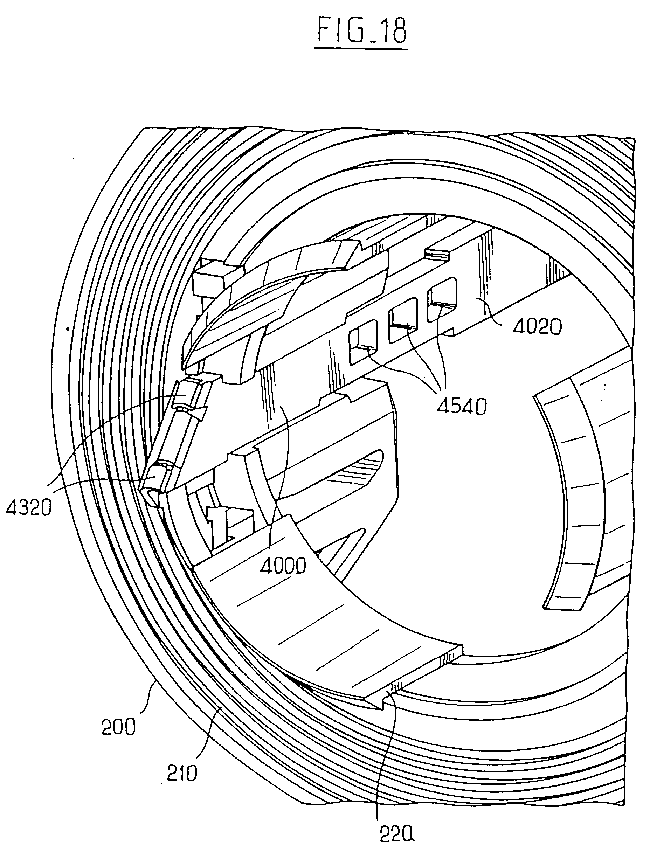

- les figures 16, 17 et 18 représentent des vues similaires aux figures 11 et 12 et illustrent diverses étapes successives de l'engagement d'un boîtier de protection conforme à la seconde variante de réalisation, sur le couvercle pivotant (le conducteur étant omis pour simplifier le dessin), et
- la figure 19 représente une vue en plan d'un boîtier conforme à la seconde variante de réalisation, surmoulé sur un ruban électriquement conducteur et replié sur celui-ci.

Le contacteur électrique tournant représenté sur les figures annexées comprend essentiellement un boitier fixe 100, un couvercle rotatif 200 et un conducteur souple 300. Le conducteur souple 300 est muni au moins sur l'une de ses extrémités qui émergent à l'extérieur du contacteur, d'un surmoulage de protection 460 conforme à la présente invention, ainsi que préférentiellement d'un boîtier de protection 400 au niveau d'un coude de cette sortie.

Le boîtier fixe 100 et le couvercle pivotant 300 peuvent faire l'objet de nombreux modes de réalisation. Ils sont formés de préférence par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base en forme de couronne. Les parois précitées délimitent ainsi une chambre annulaire 116 apte à recevoir le conducteur 300.

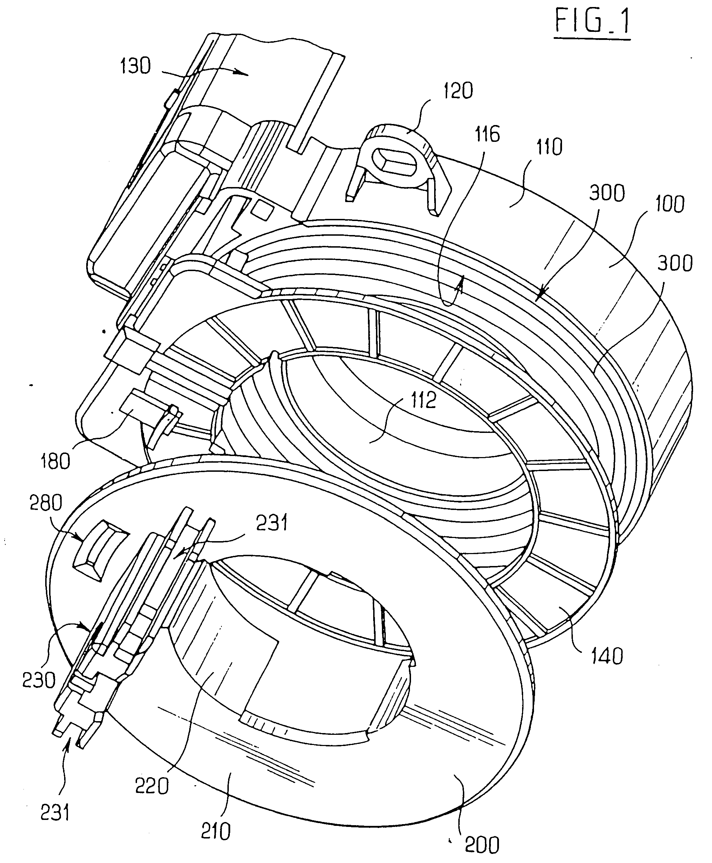

La paroi cylindrique externe 110 est pourvue de préférence de points de fixation 120 formés par exemple d'oeillets comme représenté sur la figure 1 annexée.

En outre, la paroi cylindrique extérieure 110 est munie de préférence, sur sa périphérie extérieure, d'un corps de connecteur 130. Ce corps de connecteur 130 peut comprendre des contacts électriques destinés à être reliés respectivement aux extrémités des pistes du conducteur souple 300. En variante, le corps de connecteur 130 peut êtrc équipé au contraire pour recevoir en traversée une extrémité du conducteur électrique souple 300 pourvue d'un surmoulage 460 conforme à la présente invention, ainsi que de préférence d'un boîtier de protection 400 conforme à la présente invention.

Le connecteur 130 s'étend avantageusement axialement, c'est-à-dire dans une direction générale parallèle à l'axe des parois 110, 112.

Selon le mode de réalisation préférentiel représenté sur la figure 1 annexée, la cage cylindrique délimitée par les parois 110, 112 est complétée par une entretoise 140 en forme de couronne. Cette entretoise 140 est liée à rotation avec le boîtier 100. Elle obture partiellement le contour d'ouverture de la chambre annulaire 116 précitée.

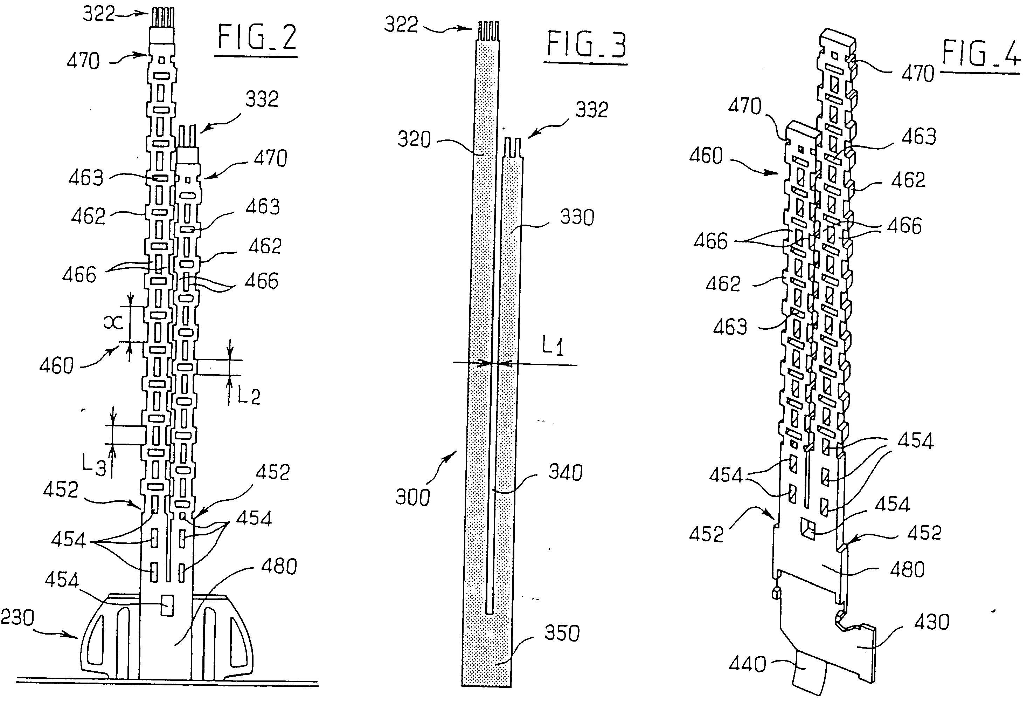

Par ailleurs, selon le mode de réalisation particulier non limitatif représenté sur les figures annexées, le couvercle pivotant 200 comprend essentiellement une paroi plane 210 en forme de couronne, coaxiale au boîtier 100. La paroi 210 est munie sur sa périphérie interne d'un fût cylindrique 220 ou de différents segments cylindriques équi-répartis autour de son axe, comme représenté sur la figure 2. Ce fût 220 est engagé dans l'espace interne du boîtier 100. Ainsi le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composant ce fût 220, lesquelles dents 222 viennent en prise avec la paroi cylindrique 112.

Par ailleurs, le couvercle 210 est muni également d'un corps de connecteur 230, avantageusement au niveau de sa périphérie interne, sur sa face opposée au fût 220. Le corps de connecteur 230 s'étend dans une direction axiale, c'est-à-dire parallèlement à l'axe du couvercle 200 et du boîtier 100. Le corps de connecteur 230 peut comprendre des contacts électriques conçus pour être reliés respectivement aux pistes du conducteur électrique souple 300. Cependant, de préférence, ce corps de connecteur 230 est adapté pour recevoir en traversée une extrémité du conducteur électrique souple 300 équipée d'un surmoulage 460 conforme à la présente invention et équipée de plus avantageusement d'un boîtier de protection 400 conforme à la présente invention.

Selon la représentation de la figure 1, le couvercle 200 est ainsi placé sur la face de l'entretoise 140 opposée à la chambre annulaire 116.

De préférence, le boîtier 100, avantageusement l'entretoise 140 et le couvercle pivotant 200, sont équipés de moyens 180, 280 adaptés pour visualiser la position relative en rotation du couvercle pivotant 200 par rapport au boîtier fixe 100. Ces moyens de repérage 180, 280 sont précisés dans une demande de brevet déposée en parallèle par la Demanderesse et pour cette raison ne seront pas identifiés dans le détail par la suite.

Le conducteur souple 300 peut faire l'objet de nombreux modes de réalisation. Il est formé de préférence d'un circuit imprimé ou d'un film plastique souple pourvu de plusieurs pistes métallisées parallèles.

Le couvercle pivotant 200 est conçu pour être lié à rotation avec le volant par tout moyen approprié, par exemple au niveau des flancs 231 du corps de connecteur 230.

On va maintenant préciser la structure du surmoulage de protection 460 conforme à la présente invention, en regard des figures 2 à 4 annexées.

Comme explicité précédemment, ce surmoulage de protection 460 est formé pour protéger plusieurs brins 320, 330, généralement parallèles, séparés, formés en sortie du conducteur souple 300. Selon le mode de réalisation représenté sur les figures 2 à 4, il est ainsi prévu un surmoulage de protection 460 sur deux brins parallèles 320, 330, formés en sortie du conducteur souple 300. L'invention n'est cependant pas limitée à ce mode de réalisation particulier. On peut ainsi prévoir un surmoulage de protection 460 sur un nombre de brins supérieur à deux.

Les brins 320, 330, peuvent être séparés par exemple par réalisation d'une découpe longitudinale 340 dans un film souple pourvu de plusieurs pistes électriquement conductrices, composant le conducteur 300.

Ainsi, comme on le voit sur la figure 3, les différents brins 320, 330, sont reliés à leur base 350.

Compte-tenu de l'encombrement généralement imposé sur véhicule automobile, la largeur L1 de la découpe longitudinale 340, c'est-à-dire la distance séparant les deux brins 320, 330, est typiquement au maximum de l'ordre de 1mm.

Sur la figure 3, les pistes métallisées prévues sur les différents brins 320, 330, sont référencées respectivement 322 et 332. Comme on le devine à l'examen de la figure 3, le pas de ces pistes 322, 332, peut être différent d'un brin 320 à l'autre 230, voir même variable sur un même brin 320 ou 330.

A titre d'exemple non limitatif, on peut prévoir deux pistes 332 d'un pas de l'ordre de 2,54mm, sur le brin 330, pour l'alimentation d'un coussin gonflable de sécurité, et un pas de l'ordre de 1,27mm pour les pistes 322 prévues sur l'autre brin 320, pour l'alimentation d'autres fonctions. Bien sûr, le pas des pistes 322, 332 dépend de la puissance électrique destinée à être véhiculée sur ces pistes.

Le but de la présente invention est de réaliser, à l'aide d'un surmoulage 460 unique, la protection simultanée des différents brins 320, 330, tout en conservant une relative souplesse à ceux-ci.

Plus précisément encore, comme on le voit sur les figures 2 et 4, de préférence le surmoulage de protection 460 est opéré à la fois sur les brins 320, 330, individualisé, et sur la base commune 350 de ceux-ci.

Plus précisément encore, comme indiqué précédemment selon l'invention, chaque élément du surmoulage 460 formé sur les différents brins 320, 330 présentent, le long de ceux-ci, des motifs de largeur non constante, et les éléments du surmoulage 460 prévus sur chacun des brins 320, 330 sont décalés relativement d'un demi pas des motifs de sorte que les creux des motifs de l'un des surmoulages soit placé en regard des ventres des motifs de l'autre surmoulage.

Ainsi, malgré le faible écartement L1 prévu entre les différents brins 320, 330, l'invention permet de réaliser aisément des surmoulages de protection qui entourent au moins localement les différents brins 320, 330.

Plus précisément encore, de préférence les motifs formés sur l'élément de boîtier de protection 460 recouvrant le brin 320 sont identiques à ceux de l'élément du boîtier de protection 460 recouvrant le brin 330. D'autre part, les motifs du boîtier de protection 460 prévus sur le brin 320 ont avantageusement un pas identique au pas des motifs prévu pour le boîtier de protection 460 sur l'autre brin 330. En outre, ce pas des motifs du boîtier de protection 460 est avantageusement constant sur toute la longueur des brins 320, 330.

Selon le mode de réalisation préférentiel, bien entendu non limitatif, représenté sur les figures annexées, les motifs des surmoulages 460 sont formés d'anneaux 462, espacés entre eux, qui entourent chaque brin respectif 320, 330 du conducteur souple, et d'au moins une bretelle longitudinale 466 qui relie deux à deux les anneaux 462.

Plus précisément encore, selon le mode de réalisation préférentiel représenté sur les figures annexées, chaque anneau 462 est ajouré en son centre, sur chacune des faces principales des brins 320, 330.

Les lumières ainsi formées dans les anneaux 462 sont référencées 463 sur les figures annexées.

En outre, de préférence, il est prévu deux bretelles longitudinales 466 de liaison entre chaque paire d'anneaux 462, respectivement sur chacune des faces principales des brins 320, 330 du conducteur souple 300.

Sur les figures annexées, on a référencé x le pas des motifs du surmoulage de protection 460. Comme on le voit sur les figures 2 et 4, les éléments du surmoulage de protection 460 sont décalés d'une valeur x/2 entre les deux brins 320, 330.

Ainsi, les bretelles 466, prévues sur le brin 320 sont placées en regard des anneaux 462 placés sur le brin 330 tandis que les anneaux 462 prévus sur le brin 320 sont placés en regard des bretelles 466 prévus sur le brin 330 et inversement.

Bien entendu, pour permettre cette réalisation, la longueur L2 des anneaux 462, considérée longitudinalement, doit être inférieure à la longueur L3 des bretelles 466.

De plus, de préférence, chaque élément du surmoulage de protection 460 prévu sur un brin 320, 330 spécifique est muni à son extrémité, de formes 470 adaptées pour coopérer avec des structures complémentaires prévues sur un connecteur associé afin de permettre une reprise d'effort à l'arrachement, évitant toute sollicitation au niveau des liaisons entre les pistes 322 et 332 du conducteur souple et la connectique extérieure associée.

Selon un mode de réalisation avantageux de l'invention, ces formes 470 peuvent être constituées d'évidements latéraux, de décrochements, ou d'encoches formés en creux dans le surmoulage 460.

De même, les éléments de surmoulage de protection 460 peuvent être munis, soit individuellement, soit au niveau de leur base commune 480 formé sur la base 350 du conducteur souple, de structures conçues pour permettre un accrochage sur le boîtier du contacteur.

Sans que l'invention soit limitée à ce mode de réalisation, on décrira par la suite des décrochements 452 et encoches 454 prévus à cet effet dans les surmoulages de protection 460 et/ou le boîtier de protection 400.

Comme on l'a mentionné précédemment, le surmoulage de protection 460 est en effet de préférence venu de moulage avec un boîtier de protection 400 prévu au niveau d'un coude à 90° du conducteur souple 300, dans la zone de sortie du contacteur tournant.

La structure du surmoulage de protection 460 conforme à la présente invention, offre notamment les avantages suivants :
- elle évite toute liaison additionnelle, par exemple à l'aide de fils rapportés, entre les sorties du conducteur souple 300 et les lieux de raccordement souhaités, en autorisant une liaison directe entre ces sorties du conducteur souple 300 et les lieux de connexion précités,
- elle permet des liaisons, en des implantations différentes, entre les sorties respectivement du conducteur souple 300 et les connecteurs respectivement associés,
- elle permet un surmoulage multi-sorties en une seule opération, avec un boîtier de protection 400 sur un coude du conducteur,
- elle autorise une adaptation personnalisée aux connexions extérieures,
- elle s'applique à tout type de conducteurs souples susceptibles d'être utilisés dans un contacteur tournant, en particulier aux rubans multi-pas prédécoupés,
- elle évite toute opération ultérieure de redécoupe d'un surmoulage de protection.

On notera que le conducteur souple 300 surmoulé par l'élément de protection 460 peut être obtenu par découpe en largeur d'une feuille plastique pourvue de pistes électriquement conductrices, de grande largeur, pour réaliser simultanément plusieurs conducteurs souples 300 juxtaposés et par conséquent simultanément plusieurs surmoulages de protection 460 (et le cas échéant, plusieurs boîtiers de protection 400 respectivement associés) sur les rubans respectifs 300 ainsi individualisés.

On va maintenant préciser la structure du boîtier de protection 400 conforme à la présente invention placé au moins sur une extrémité du conducteur souple 300, par exemple l'extrémité de ce conducteur destinée à être engagée dans le corps de connecteur 230 lié au couvercle pivotant 200.

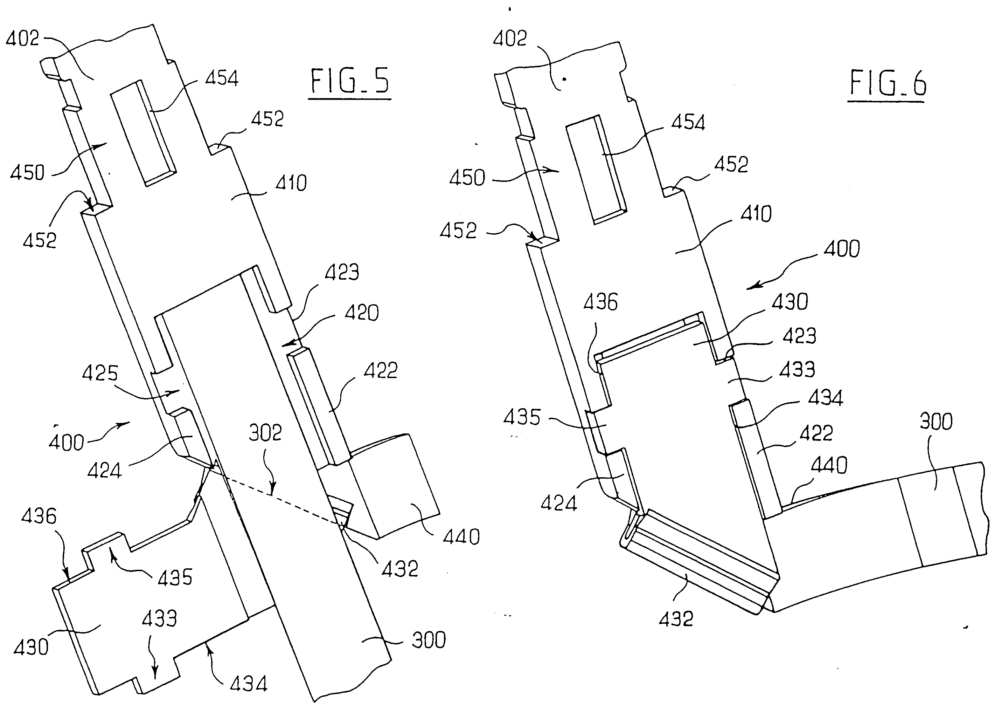

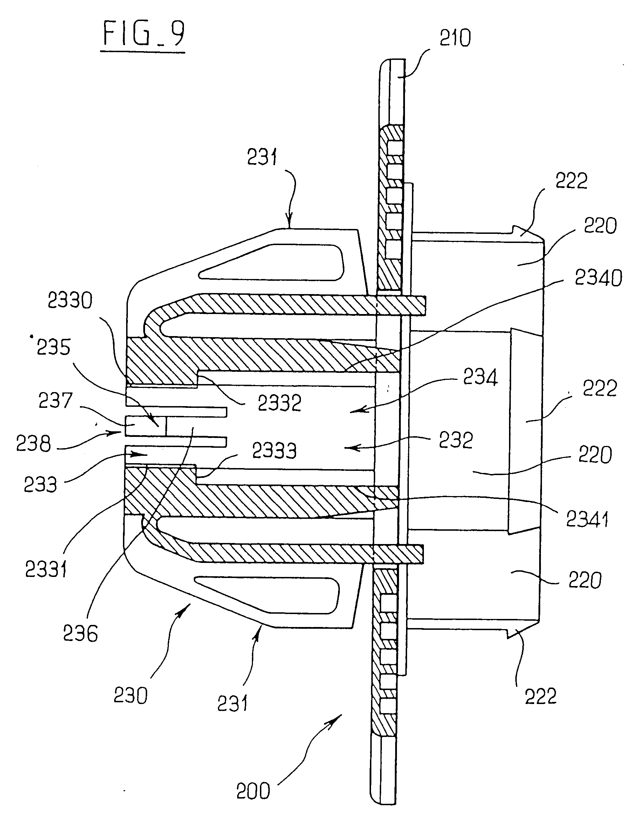

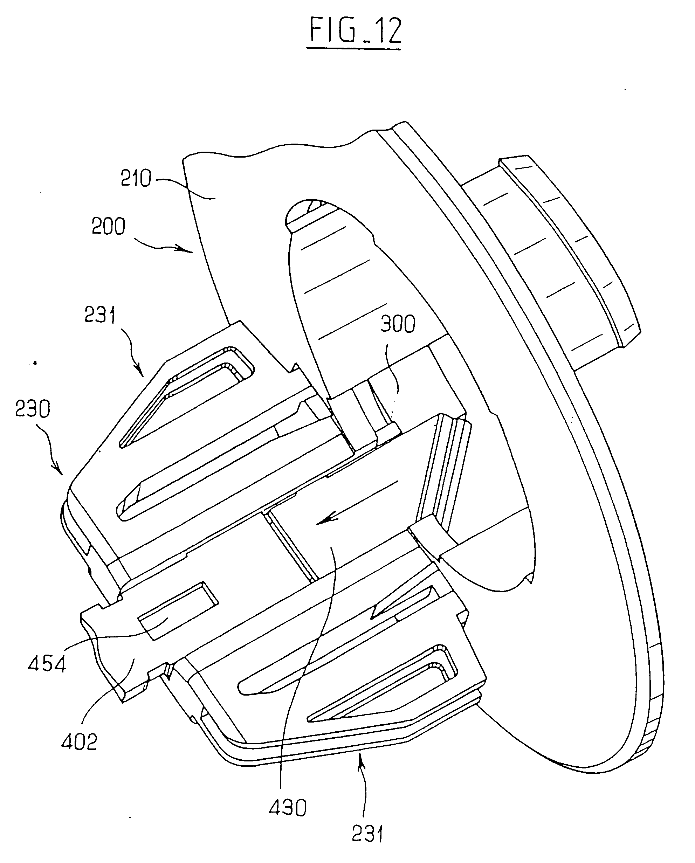

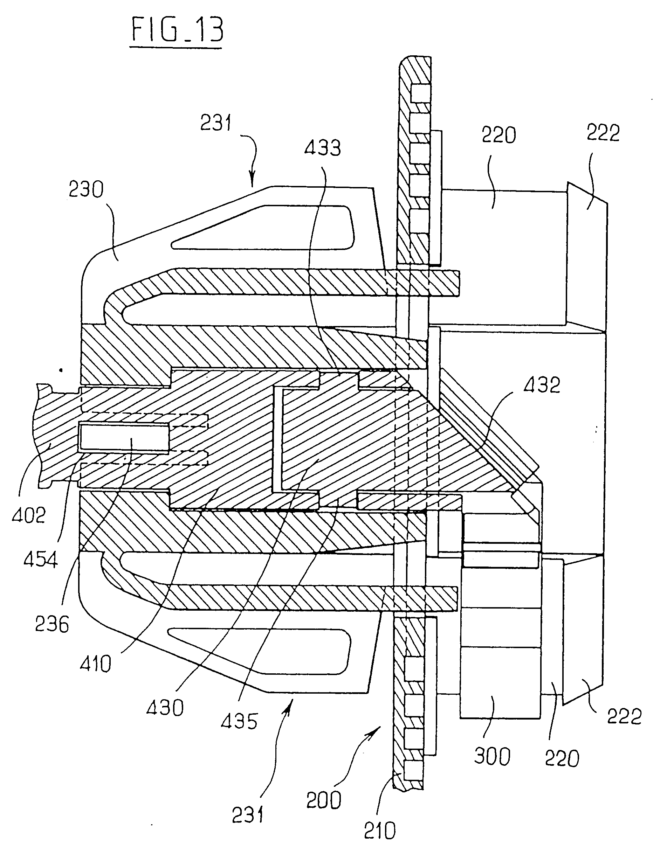

Plus précisément on va tout d'abord décrire la structure du boîtier de protection 400 conforme à la première variante de réalisation représentée sur les figures 5 à 13.

Ce boîtier 400 est conçu pour assurer la protection mécanique et une protection contre les détériorations électriques du conducteur souple 300.

Ce boîtier de protection 400 est avantageusement surmoulé sur le conducteur souple 300, et venu de moulage avec le surmoulage 460 précité, bien qu'en variante il soit possible de prévoir un boîtier de protection 400 indépendant du conducteur souple 300 et placé, au moment de l'assemblage, sur celui-ci.

Plus précisément encore, de préférence, le boîtier de protection 400 est adapté selon l'invention pour être surmoulé en ligne avec le surmoulage 460, sur le conducteur électrique souple 300. C'est-à-dire que de préférence le boîtier de protection 400 est surmoulé avec le surmoulage 460 sur le conducteur souple 300 au niveau d'un poste de surmoulage situé entre une bobine d'alimentation de conducteur souple nu 300 et un poste de réception comprenant une bobine de réception du conducteur souple 300 équipé du boîtier de protection 400 et du surmoulage 460.

Sur les figures 5, 6 et 11, on a référencé 402 une zone assurant la liaison entre le boîtier de protection 400 et l'enrobage de protection 460 formé par surmoulage.

Le corps du boîtier de protection 400 représenté sur les figures 5 et 6 comprend une première zone 410 de section droite rectangulaire constante qui entoure totalement le conducteur 300.

Cet élément 410 se prolonge longitudinalement par un embout latéral 420. Ainsi cet embout 120 est accolé à une face du conducteur souple 300.

L'embout 420 est muni de deux nervures longitudinales 422, 424 qui encadrent le conducteur souple 300. Ces nervures 422, 424 sont munies chacune sur leur longueur d'une découpe 423, 425.

En outre, l'embout 420 se prolonge, à l'opposé de l'élément 410, par une languette 430. Cette languette 430 presente un contour général rectangulaire. Elle est à l'origine coplanaire de l'embout 420. Par ailleurs, la languette 430 s'étend de préférence à 90° de la direction longitudinale du conducteur 300.

La languette 430 est reliée à l'embout 420 par une zone de liaison souple de faible épaisseur 432. A titre d'exemple non limitatif la zone de liaison souple 432 peut présenter une épaisseur de l'ordre de 0,3mm.

Cette zone de liaison souple 432 est inclinée par rapport à la direction longitudinale du conducteur souple 300, avantageusement de l'ordre de 45°.

La largeur de la languette 430 est complémentaire de la largeur de la chambre formée sur l'embout 420 entre les nervures 422, 424. En outre, la languette 430 est munie sur ses flancs 434, 436 d'ergots 433, 435 de contour, par exemple rectangulaire, complémentaire des découpes 423, 425. En outre, le positionnement des ergots 433, 435 sur la languette 430 est tel que, après pliage de la languette 430 autour de la ligne 432, les ergots 433, 435 pénètrent dans lesdites découpes 423, 425.

Le boîtier de protection 400 présente en outre de préférence sur l'extrémité de l'embout 420 opposé à l'élément 410, et sur le côté opposé à la languette 430, un appui 440 orienté également à 90° de la direction longitudinale du conducteur 300.

Après pliage du boîtier de protection 400 autour de la ligne de faiblesse 432, la languette 430 pénètre dans la chambre de l'embout 420 formée entre les nervures 422, 424 et les ergots 433, 435 pénètrent dans les découpes 423, 425. Le conducteur souple 300 est lui-même plié autour d'une ligne 302 présentant la même inclinaison que la ligne de faiblesse 432, soit avantageusement 45° par rapport à la direction longitudinale du conducteur 300. Le conducteur 300 est ainsi plié de l'ordre de 90° et prend appui sur la structure 440.

Le boîtier de protection 400 conforme à la présente invention permet un pli naturel du ruban formant le conducteur 300. Le cas échéant on peut envisager de marquer au préalable le ruban 300 sur la ligne 302 de pliage précitée pour faciliter le pli de ce ruban conducteur 300.

En outre, de préférence, l'élément 410 du boîtier de protection se prolonge à l'opposé de l'embout 420 par un élément 450 de plus faible section transversale de sorte qu'un décrochement 452 dirigé à l'opposé de l'embout 420 soit défini au niveau de la zone de liaison entre les éléments 410, 450. Plus précisément, il est ainsi prévu un décrochement 452 de chaque côté de l'élément 450, soit sur les deux flancs de celui-ci.

De plus, le prolongement 450 formé sur le boîtier de protection 400 est muni de préférence d'une encoche centrale 454, par exemple de contour rectangulaire, et avantageusement longitudinale.

Le boîtier de protection 400 plié sur le ruban conducteur 300 évite tout frottement du ruban sur un élément en mouvement, dans cette zone rigide.

Comme on l'a mentionné précédemment, le boîtier de protection 400 précité peut être utilisé pour fixer une extrémité du ruban conducteur 300 sur le corps de connecteur 230 lié au couvercle pivotant 200 ou sur le connecteur 130 lié au boîtier fixe 100.

Par la suite on va décrire une structure de corps de connecteur 230 liée au couvercle pivotant 200 adaptée pour recevoir ce boîtier de protection 400.

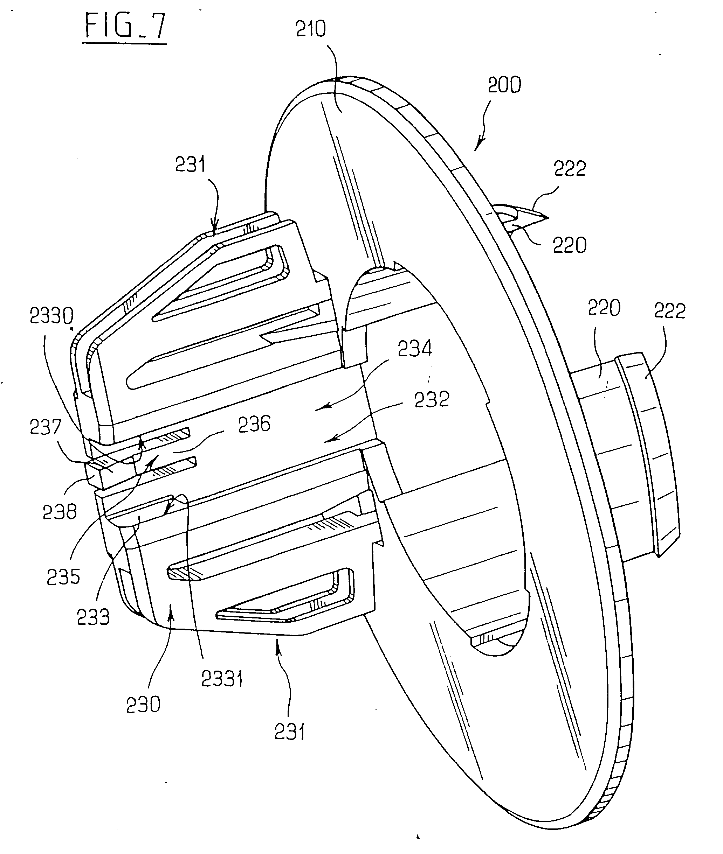

Selon le mode de réalisation représenté sur les figures 7 et suivantes, le corps de connecteur 230 comprend un bloc venu de moulage avec le couvercle 200. Ce bloc formant le corps de connecteur 230 présente une symétrie par rapport à un plan axial, c'est-à-dire un plan passant par l'axe du couvercle 200. Ce bloc 230 a la forme générale d'une lame disposée tangentiellement par rapport à la périphérie interne de la couronne constituant le couvercle pivotant 200.

Par ailleurs, le corps de connecteur 230 présente une gorge axiale 232 conçue pour recevoir le boîtier de protection 400.

Plus précisément la gorge 232 se décompose axialement en deux zones 233, 234.

La première zone 234 de la gorge 232 débouche sur l'extrémité libre du bloc 230 opposée à la paroi de base 210. Cette zone 233 de la gorge 232 présente une section droite en U. La largeur de cette zone 233, c'est-à-dire la distance séparant les flancs 2330 et 2331 de cette zone est de préférence égale à la largeur du prolongement 450 précité.

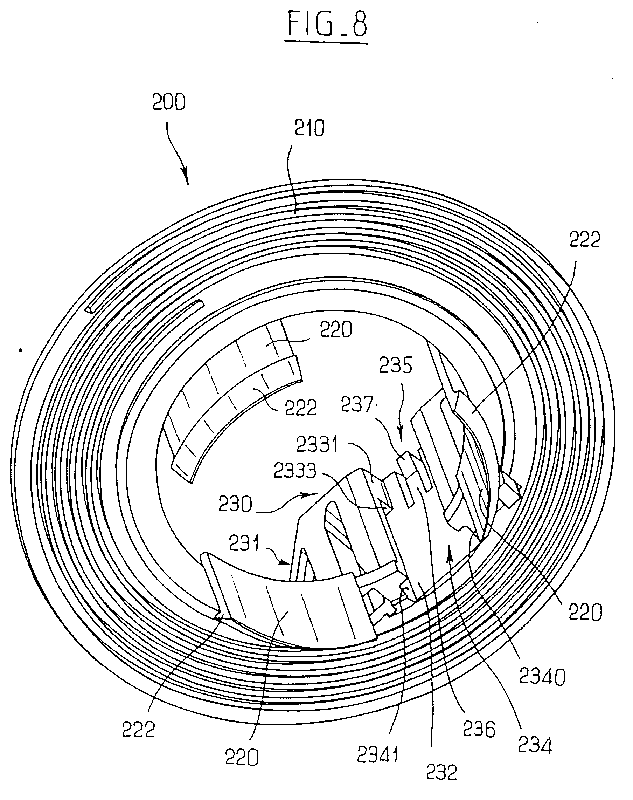

La seconde zone 233 de la gorge 232 est adjacente à la paroi de base 210. Au niveau de cette zone 234 la gorge 232 présente des bords convergents. On aperçoit notamment cette zone 234 à bords convergents sur la figure 8.

La largeur interne de la zone 234 à bords convergents, c'est-à-dire la distance séparant les flancs 2340, 2341 de celle-ci est complémentaire de la largeur de l'élément 410 du boîtier et de l'embout 420. De préférence, l'embout 420 présente en effet la même largeur que l'élément 410 précité.

En revanche, la largeur d'ouverture de la zone 234, c'est-à-dire la distance séparant les deux bords convergents de la zone 234 est de préférence égale à la largeur de la zone 233 précitée.

Après pliage de la languette 430 sur l'embout 420, le boîtier de protection 400 présente une épaisseur sensiblement constante.

La profondeur de la rainure à bords convergents formée au niveau de la zone 234 est avantageusement de l'ordre de grandeur de l'épaisseur du boîtier de protection 400.

On notera qu'il est défini entre les deux zones 233, 234 de la gorge 232, plus précisément au niveau du raccordement respectivement des flancs 2330 et 2331 sur les flancs 2340 et 2341, des décrochements 2332, 2333 dirigés vers la paroi de base 210.

Comme on le précisera par la suite, ces décrochements 2332, 2333 sont destinés à servir d'appui respectivement aux décrochements 452 prévus sur le boîtier de protection 400.

En outre, de préférence, le corps de connecteur 230 est muni, au niveau de la gorge 232, d'une structure de verrouillage 235.

Cette structure de verrouillage 235 est formée avantageusement d'une languette 236 longitudinale venue de moulage sur le fond de la gorge 232.

Plus précisément, la languette 236 est munie avantageusement sur sa face coplanaire du fond de la gorge 232 d'une denture en saillie 237. Les positionnements de la languette 236 et de la denture 237 dans la gorge 232 sont adaptés de sorte que lorsque les décrochements 452 reposent contre les décrochements 2332, 2333, la denture 237 pénètre dans l'encoche 454 du boîtier de protection 400.

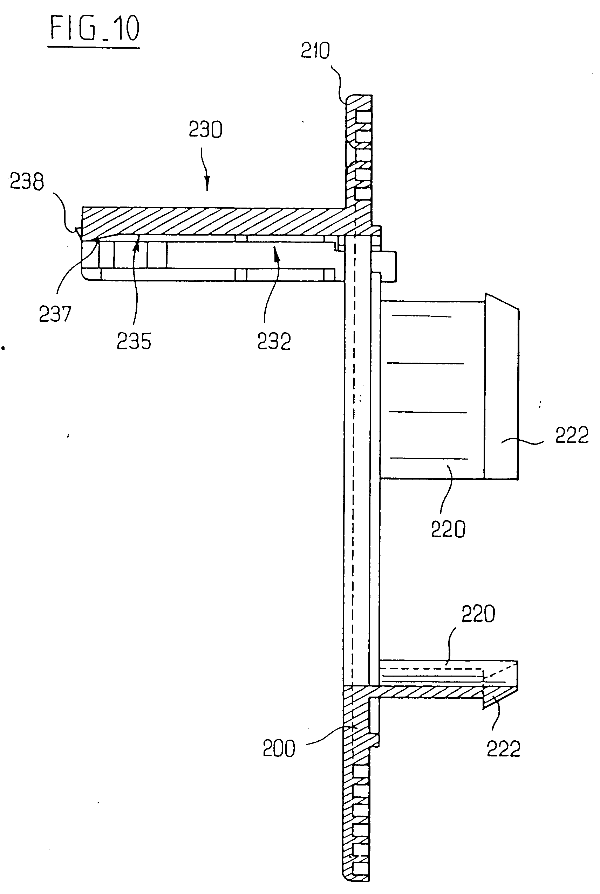

De préférence, comme on le voit sur la figure 10, le sommet de la languette 236 adjacent à la denture 237, c'est-à-dire l'extrémité de la languette 236 opposée à la paroi de base 210, et référencée 238 sur la figure 10, est avantageusement incliné par rapport à l'axe du couvercle pivotant 200. Cette surface inclinée 238 sollicite une paroi de l'encoche 454 et permet un verrouillage sans jeu du boîtier de protection 400.

Pour assembler le conducteur 300 équipé d'un boîtier de protection 400 conforme à la présente invention, on procède essentiellement comme suit.

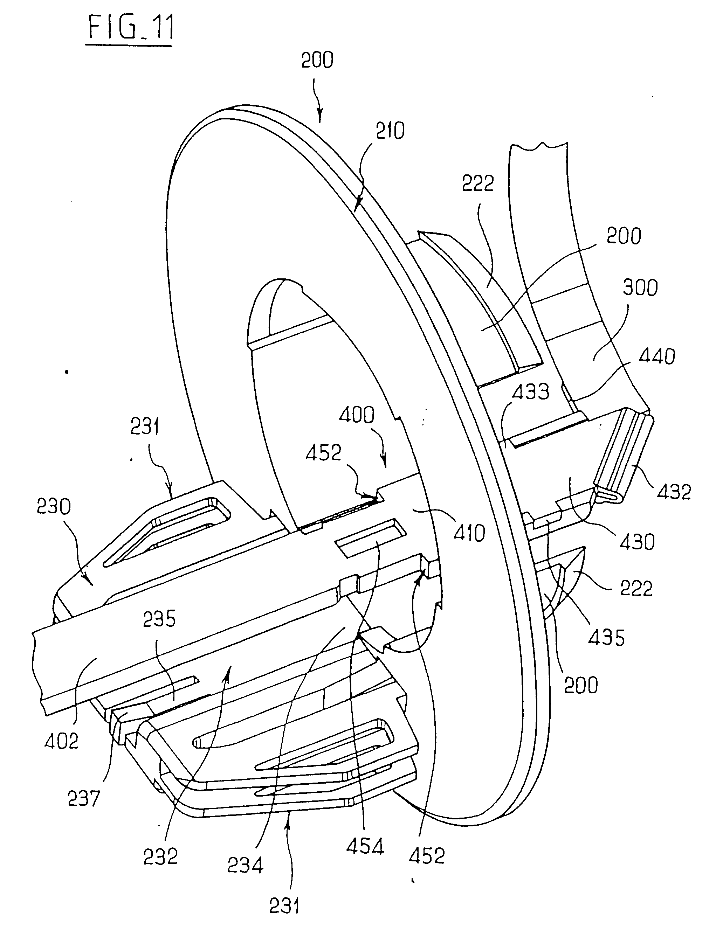

Le ruban conducteur 300 équipé du boîtier de protection 400 est engagé dans l'espace interne du couvercle pivotant 200, comme on le voit sur la figure 11.

Le cas échéant, au cours de cette étape, le ruban 300 peut être pré-équipé d'un connecteur, en extrémité. Dans ce cas, bien entendu, le passage central du couvercle pivotant 200 doit être adapté pour recevoir en traversée ce connecteur.

Le boîtier de protection 400 est alors engagé dans la gorge 232. Plus précisément, le prolongement 450 est engagé dans la zone en U 233 de cette gorge 232, tandis que l'élément 410 et l'embout 420 sur lequel est repliée la languette 430 sont engagés dans la zone 234 à bords convergents de cette gorge.

Cet engagement est réalisé jusqu'à ce que les épaulements 452 du boîtier de protection viennent en appui respectivement contre les épaulements 2332 et 2333 du corps de connecteur 230. Au cours de cet engagement, la languette 236 fléchit élastiquement jusqu'à pénétration de la dent 237 dans l'encoche 434. Après cet encliquetage la languette 236 reprend élastiquement sa position de repos. Grace à sa surface d'extrémité inclinée 238 elle évite tout jeu entre le boîtier de protection 400 et le corps de connecteur 230, et par conséquent entre le ruban conducteur 300 et ce corps de connecteur 230.

En outre, l'encliquetage défini entre la dent 237 et l'encoche 454 évite tout démontage ou retrait intempestif du conducteur 300.

On notera par ailleurs que les ergots 433, 435 du boîtier de protection 400 contraints par la zone de pliage du ruban et la zone 432 de pliage du boîtier 400 sont sollicités en écartement de l'embout 420 et viennent par conséquent en appui sur le fond de la gorge 232 ou encore sur les bords convergents de cette gorge.

La structure proposée par la présente invention permet de localiser, maintenir et protéger le pli 302 formé sur le ruban conducteur 300.

Elle permet également une liaison rapide et sans jeu du ruban 300 y compris si celui-ci est équipé d'un connecteur.

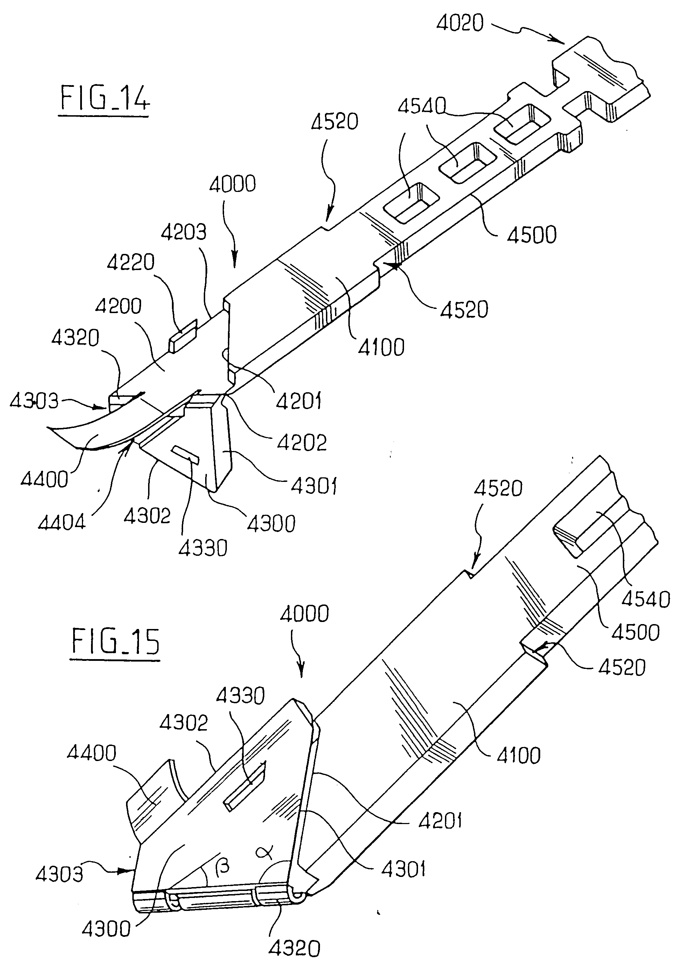

On va maintenant décrire le boitier conforme à la seconde variante de réalisation de la présentre invention, représentée sur les figures 14 et suivantes.

Les éléments du boitier 4000 représenté sur les figures 14 et suivantes portent des références identiques, à un facteur 10 près, aux élements homologues de la première variante de réalisation représentée sur les figures 5 à 13.

Le boîtier 4000 est là encore conçu pour assurer la protection mécanique et une protection contre les détériorations électriques du conducteur souple 300.

Ce boîtier de protection 4000 est avantageusement surmoulé sur le conducteur souple 300 avec le surmoulage 460, bien qu'en variante il soit possible de prévoir un boîtier de protection 4000 indépendant du conducteur souple 300 et placé, au moment de l'assemblage, sur celui-ci.

Plus précisément encore, de préférence, le boîtier de protection 4000 est adapté selon l'invention pour être surmoulé en ligne sur le conducteur électrique souple 300 avec le surmoulage 460. C'est-à-dire que de préférence le boîtier de protection 4000 est surmoulé sur le conducteur souple 300 avec le surmoulage 460 au niveau d'un poste de surmoulage situé entre une bobine d'alimentation de conducteur souple nu 300 et un poste de réception comprenant une bobine de réception du conducteur souple 300 équipé du boîtier de protection 4000. Comme on le précisera par la suite, le boîtier 4000 permet en outre de surmouler simultanément plusieurs rubans 300 juxtaposés.

On a représenté sur les figures 14 et suivantes sous la référence 4020 une zone de liaison entre le boîtier de protection 400 et l'enrobage de protection 460 surmoulé.

Le corps du boîtier de protection 4000 représenté sur les figures 14 et suivantes comprend une première zone 4100 de section droite rectangulaire constante qui entoure totalement le conducteur 300.

Cet élément 4100 se prolonge longitudinalement par un embout latéral 4200. L'embout 4200 est coplanaire de l'une des faces de l'élément 4100 et présente de préférence une épaisseur qui est de l'ordre de la moitié de l'élément 4100. Ainsi cet embout 4200 est accolé à une face du conducteur souple 300. L'embout 4200 possède avantageusement la même largeur que l'élément 4100.

En outre, l'embout 4200 se prolonge, à l'opposé de l'élément 4100, par une languette 4300.

La languette 4300 est reliée à l'embout 4200 par une zone de liaison souple de faible épaisseur 4320. A titre d'exemple non limitatif la zone de liaison souple 4320 peut présenter une épaisseur de l'ordre de 0,3mm.

Plus précisément la languette 4300 présente un contour généralement similaire à celui de l'embout 4200. Cependant la languette 4300 présente de préférence une surface supérieure à celle de l'embout 4200.

Ainsi la languette 4300 recouvre l'embout 4200 après pliage autour de la zone de liaison 4320. Le ruban 300 est alors pris en sandwich entre la languette 4300 et l'embout 4200 et plié le long de la zone 4320 comme on le verra par la suite.

Selon le mode de réalisation préférentiel représenté sur les figures 14 et suivantes, le contour de l'embout 4200 et de la languette 4300 est adapté de sorte que lors du moulage, la languette 4300 ne dépasse pas du gabarit en largeur du surmoulage formé par l'élément 4100 et l'embout 4200. Ainsi la présente invention permet de surmouler simultanément plusieurs rubans 300 juxtaposés. Plus précisément la présente invention permet ainsi d'utiliser une feuille de matière plastique ou équivalent, de grande largeur, par exemple de 200 mm de large, pourvue de pistes métallisées, et de diviser cette feuille dans sa largeur pour obtenir plusieurs rubans 300 conformes à la présente invention, par exemple d'une largeur de 7,62 mm de large, en procédant immédiatement en aval du poste de découpe en largeur, au surmoulage simultané des différents boîtiers 4000 sur les rubans 300 respectifs.

Plus précisément encore selon le mode de réalisation représenté sur les figures 14 et suivantes, l'embout 4200 et la languette 4300 possèdent chacun un contour généralement triangulaire, avantageusement isocèle.

Les trois côtés principaux de l'embout 4200 sont référencés 4201, 4320 et 4203.

Les trois côtés principaux de la languette 4300 sont référencés 4301, 4320 et 4302.

La zone 4201 de raccordement de l'embout 4200 sur l'élément 4100 est de préférence rectiligne et inclinée par rapport à la direction longitudinale du ruban, par exemple de l'ordre de 45°.

La zone d'articulation 4320 est également rectiligne et inclinée par rapport à la direction longitudinale du ruban, par exemple de l'ordre de 45°. Ainsi l'inclinaison entre les zones 4201 et 4320 est avantageusement de l'ordre de 90° et ces deux zones 4201 et 4320 se coupent sensiblement sur un premier côté du surmoulage au niveau d'un point référencé 4202 sur les figures 14 et suivantes.

La base du triangle formé par l'embout 4200 est constituée par le côté 4203 du surmoulage opposé à ce point 4202.

A l'origine la languette 4300 est surmoulée dans une position inclinée, non coplanaire de l'embout 4200. La languette 4300 est de préférence inclinée d'environ 90°, au moment du moulage, par rapport à l'embout 4200. Cette disposition permet à la fois de ne pas dépasser le gabarit en largeur de l'embout 4200 et de l'élément 4100, et par conséquent de mouler simultanément plusieurs boîtiers 4000 sur des rubans 300 juxtaposés, tout en bénéficiant d'une languette qui s'étend après pliage au delà de la partie du ruban 300 pliée à 90°, c'est à dire au delà de la zone de recouvrement entre les deux brins superposés et repliés à 90° du ruban, afin de garantir une fixation fiable de la languette 4300 sur l'embout 4200.

La zone d'articulation 4320 forme un premier côté de la languette 4300. Un second côté 4301 de cette languette 4300, adjacent à la zone de liaison 4201 après pliage, est inclinée d'environ 90° par rapport au premier côté précité. Pour obtenir une languette 4300 qui s'étend au delà de la zone de recouvrement du ruban 300 plié, il est nécessaire que l'inclinaison a de ce côté 4301 (i.e. le côté 4301 de la languette 4300 qui se raccorde sur l'extrémité de la zone de pliage 4320 la plus proche de l'élément 4100) par rapport à la zone de pliage 4320 soit supérieure à l'inclinaison β de cette zone de pliage 4320 par rapport à la direction longitudinale du ruban 300. Enfin le troisième côté 4302 de la languette 4300, est incliné d'environ 45° par rapport aux deux côtés précités 4320 et 4301 de ladite languette 4300.

Après pliage le côté 4302 de la languette 4300 est parallèle au côté 4203 de l'embout 4200. Plus précisément, de préférence le côté 4302 de la languette 4300 est raccordé à la zone charnière 4320 par l'intermédiaire d'un côté auxiliaire, lui-même orthogonal à la zone charnière 4320, de sorte qu'après pliage le côté 4302 de la languette 4300 soit placé au-delà du côté 4203 de l'embout 4200.

L'embout 4200 et la languette 4300 sont munis de moyens d'encliquetage complémentaires. Ces moyens d'encliquetage peuvent faire l'objet de nombreuses variantes de réalisation.

Selon le mode de réalisation particulier et non limitatif, représenté sur les figures 14 et suivantes, ces moyens d'encliquetage comprennent d'une part un ergot 4220 en saillie sur l'embout 4200 à proximité du côté longitudinal 4203 et d'autre part une ouverture complémentaire 4330 formée dans la languette 4300, à proximité du bord 4302. L'ergot 4220 est placé en regard du côté de liaison 4201 de l'embout 4200 et non pas en regard de la zone de liaison 4320, de sorte que cet ergot 4220 n'interfère pas avec la partie de ruban 300 repliée.

Le boîtier de protection 4000 présente en outre de préférence un appui souple 4400 conçu pour soutenir la partie du ruban 300 (non représenté sur les figures 14 et 15 pour simplifier l'illustration) qui émerge du boitier 4000 aprés pliage à 90° selon la ligne 4201.

Selon le mode de réalisation particulier représenté sur les figures 14 et suivantes, cet appui est formé d'une lame initialement coplanaire, au moulage, de l'embout 4200, et qui se raccorde au milieu de la zone d'articulation 4320. En variante la lame qui forme l'appui 4400 pourrait être raccordée au côté 4302 de la languette 4300.

Ainsi aprés pliage à 90° de la languette 4300, autour de la zone 4320, la lame ou appui 4400 est orienté latéralement à 90° de l'embout pour soutenir le ruban 300.

On notera que de préférence la languette 4300 possède un décrochement 4304 en regard de cet appui 4400.

Après pliage du boîtier de protection 4000 autour de la ligne de faiblesse 4320, la languette 4300 recouvre l'embout 4200 et est immobilisée grâce à la coopération des moyens d'encliquetage 4220 et 4330. Le conducteur souple 300 est lui-même plié autour d'une ligne 302 présentant la même inclinaison que la ligne de faiblesse 4320, soit avantageusement 45° par rapport à la direction longitudinale du conducteur 300. Le conducteur 300 est ainsi plié de l'ordre de 90° et prend appui sur la structure 4400.

Le boîtier de protection 4000 conforme à la présente invention permet un pli naturel du ruban formant le conducteur 300. Là encore on peut envisager de marquer au préalable le ruban 300 sur la ligne 302 de pliage précitée pour faciliter le pli de ce ruban conducteur 300.

En outre, de préférence, l'élément 4100 du boîtier de protection se prolonge à l'opposé de l'embout 4200 par un élément 4500 de plus faible section transversale de sorte qu'un décrochement 4520 dirigé à l'opposé de l'embout 4200 soit défini au niveau de la zone de liaison entre les éléments 4100, 4500. Plus précisément, il est ainsi prévu un décrochement 4520 de chaque côté de l'élément 4500, soit sur les deux flancs de celui-ci, aptes à coopérer avec les décrochements 2333 précités.

De plus, le prolongement 4500 formé sur le boîtier de protection 4000 est muni de préférence d'au moins une encoche centrale 4540, par exemple de contour rectangulaire, et avantageusement longitudinale, apte à coopérer avec la structure de verrouillage 235-237 précitée.

On notera par ailleurs que de préférence, pour permettre après découpe en largeur d'une feuille, de surmouler simultanément plusieurs boitiers 4000 sur des rubans respectifs 300 juxtaposés, lesdits rubans 300 sont refendus ou échancrés latéralemnt au niveau du surmoulage de sorte que au moins localement le boitier 4000 surmoulé entoure totalement ces rubans 300. Au niveau du surmoulage, les rubans 300 peuvent ainsi être par exemple réduits en largeur de 7,62mm à 6,2mm.

L'assemblage du ruban 300 équipé d'un boîtier 4000 sur le couvercle 200, est opéré comme indiqué précédemment pour le premier mode de réalisation. Cet assemblage est schématisé sur les figures 14 et suivantes.

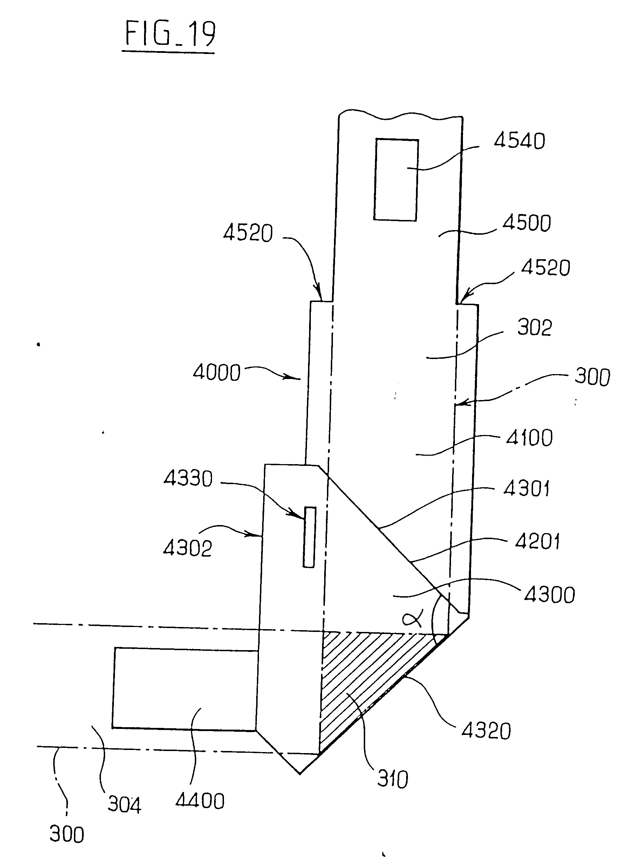

Sur la figure 19 on a schématisé en traits mixtes interrompus le ruban 300 et on a illustré sous la référence 310 une zone hachurée correspondant à la zone de superposition des deux brins 302, 304 du ruban 300 replié à 90°.

On aperçoit également sur la figure 19, le boîtier 4000, la languette 4300 et l'appui 4400. On comprend à l'examen de la figure 19 que la languette 4300 s'étend au-delà de la zone de superposition 310 et que les moyens de verrouillage 4330 sont placés dans la partie de cette languette 4300 située au-delà de cette zone de superposition 310.

Bien entendu la présente invention n'est pas limitée au mode de réalisation particulier qui vient d'être décrit mais s'étend à toute variante conforme à son esprit.

## Revendications

1. Contacteur électrique tournant du type connu comprenant deux éléments (100, 200) susceptibles de rotation relative et un conducteur électrique souple (300) entre ces deux éléments, dans lequel l'une des sorties au moins du conducteur souple (300) est formée d'au moins deux brins séparés (320, 330) munis chacun de surmoulages (460), et dans lequel ces surmoulages (460) présentent le long des brins (320, 330) des motifs (462, 466) de largeur non constante, lesdits surmoulages (460) étant décalés relativement d'un demi pas (x/2) des motifs, de sorte que les creux des motifs de l'un des surmoulages (460) soient placés en regard des ventres des motifs de l'autre surmoulage.

2. Contacteur selon la revendication 1, caractérisé par le fait que les motifs de surmoulage de protection (460) prévus sur les différents brins (320, 330) sont identiques.

3. Contacteur selon l'une des revendications 1 ou 2, caractérisé par le fait que le pas des motifs de surmoulage de protection (460) prévus sur l'un des brins (320) est égal au pas des motifs du surmoulage de protection (460) prévu sur chaque autre brin (330).

4. Contacteur selon l'une des revendications 1 à 3, caractérisé par le fait que le pas des motifs du surmoulage de protection (460) est constant.

5. Contacteur selon l'une des revendications 1 à 4, caractérisé par le fait que les motifs du surmoulage (460) sont formés d'anneaux (462) espacés qui entourent un brin respectif (320, 330) du conducteur souple et d'au moins une bretelle (466) longitudinale qui relie deux à deux les anneaux (462).

6. Contacteur selon la revendication 5, caractérisé par le fait que chaque anneau (462) est ajouré.

7. Contacteur selon l'une des revendications 5 ou 6, caractérisé par le fait qu'il est prévu deux bretelles longitudinales (466) parallèles entre elles, reliant deux à deux les anneaux (462).

8. Contacteur selon l'une des revendications 5 à 7, caractérisé par le fait que la longueur (L2) des anneaux (462) est inférieure à la longueur (L3) des bretelles (466).

9. Contacteur selon l'une des revendications 1 à 8, caractérisé par le fait que l'écartement entre les différents brins (320, 330) du conducteur souple est de l'ordre de 1mm.

10. Contacteur selon l'une des revendications 1 à 9, caractérisé par le fait que les différents brins (320, 330) sont individualisés par découpe d'un film commun.

11. Contacteur selon l'une des revendications 1 à 10, caractérisé par le fait que les différents brins (320, 330) du conducteur souple (300) présentent des pistes électriquement conductrices (322, 332) de pas différent.

12. Contacteur selon l'une des revendications 1 à 11, caractérisé par le fait que les différents brins (320, 330) du conducteur souple (300) sont reliés à leur base (350).

13. Contacteur selon l'une des revendications 1 à 12, caractérisé par le fait que les surmoulages de protection (460) sont pourvus en extrémité de formes (470) adaptées pour coopérer avec des structures prévues sur un connecteur en vue d'une reprise d'effort à l'arrachement.

14. Contacteur selon la revendication 13, caractérisé par le fait que les formes (470) prévues sur le surmoulage de protection (460) comprennent des évidements latéraux, décrochements ou encoches.

15. Contacteur selon l'une des revendications 1 à 14, caractérisé par le fait que le surmoulage de protection (460) comprend à sa base des formes (452, 454) conçues pour un accrochage sur le boîtier du contacteur.

16. Contacteur selon la revendication 15, caractérisé par le fait que les formes prévues pour l'accrochage comprennent au moins un décrochement (452) et/ou au moins une encoche (454).

17. Contacteur selon l'une des revendications 1 à 16, caractérisé par le fait qu'il comprend en outre au moins sur une extrémité du conducteur souple (300), un boîtier de protection (400, 4000) placé sur ce conducteur (300) et adapté pour maintenir un pliage sur ce conducteur et protéger la zone de pliage ainsi obtenue.

18. Contacteur selon la revendication 17, caractérisé par le fait que le boîtier de protection (400, 4000) comprend une ligne de faiblesse (432, 4320) inclinée par rapport à la direction longitudinale du conducteur (300).

19. Contacteur selon l'une des revendications 17 ou 18, caractérisé par le fait que le boîtier de protection (400, 4000) comprend une ligne de faiblesse (432, 4320) inclinée de l'ordre de 45° par rapport à la direction longitudinale du conducteur souple (300), de sorte qu'après pliage du boîtier de protection, le conducteur souple soit plié de l'ordre de 90°.

20. Contacteur selon l'une des revendications 17 à 18, caractérisé par le fait que le boîtier de protection (400, 4000) est surmoulé sur le conducteur souple (300) avec le surmoulage de protection (460).
